# EUROPEAN PATENT SPECIFICATION

(11) **EP 0 864 539 B1**
(45) Date of publication and mention of the grant of the patent: **12.06.2002**
(21) Application number: 98301720.3
(22) Date of filing: 09.03.1998
(51) Int. Cl.: C01G 51/00, H01M 4/52

(54) **Process for producing lithium-cobalt oxide**
Verfahren zur Herstellung von Lithium-Kobalt Oxid
Procédé de préparation d'oxyde de lithium et de cobalt

(30) Priority: 10.03.1997 JP 7268697
(43) Date of publication of application: 16.09.1998
(73) Proprietor: Toda Kogyo Corporation, Hiroshima-shi, Hiroshima-ken (JP)
(72) Inventor: Nakamura, Tatsuya, Hiroshima-shi, Hiroshima-ken (JP); Kanno, Ryoji, Kobe-shi, Hyogo-ken (JP); Takano, Mikio, Kyoto-shi, Kyoto-fu (JP)
(74) Representative: Woods, Geoffrey Corlett

(56) References cited:
- WO-A-94/25398
- WO-A-97/02214
- G.G. AMATUCCI: "synthesis of electrochemically active LiCoO2 and LiNiO2 at 100°C" SOLID STATE IONICS, vol. 84, 1996, HOLLAND, pages 169-180, XP002068054

## Description

The present invention relates to a process for producing lithium-cobalt oxide, and more particularly, to a process for producing lithium-cobalt oxide represented by the formula: LiₓCoO₂ (0<x<1), which is suitable as a cathode active material used in lithium ion batteries.

In recent years, in association with developments of personal computers and portable equipment such as portable telephonesor the like, there has been an increasing demand for miniaturized batteries. Especially, since lithium ion has not only a small atomic weight but also a high ionization energy, lithium ion batteries have been expected as batteries having a high electromotive force and a high energy density. In order to further increase the electromotive force and the energy density of lithium ion batteries, there have been developed lithium-cobalt oxides represented by the formula: LiₓCoO₂ (0<x<1), which can provide as high a voltage as about 4V when used as a cathode active material for lithium ion batteries.

These lithium-cobalt oxides have been conventionally produced by calcining mixtures of cobalt oxide and a lithium compound at an elevated temperature such as not less than 500°C (USP No. 4,302,518). However, the lithium-cobalt oxides obtained by the calcination using such an elevated temperature have the following problems. That is, electrodes of batteries are generally formed by coating a mixture composed of electrode material particles and a binder onto a substrate. For this reason, the electrode material particles are required to have a good dispersibility in the binder. However, the lithium-cobalt oxide particles produced by the above-mentioned conventional method are sintered together due to the high-temperature calcination, resulting in deteriorated dispersibility in the binder.

In addition, as an another method for producing the lithium-cobalt oxides, there is also known a method of calcining mixtures of cobalt oxide and a lithium compound at a temperature as low as 400 to 500°C. The lithium-cobalt oxides produced by this method have a crystal structure showing an intermediate ion distribution between those of a disordered tetragonal rock salt-type crystal structure and a spinel structure. Therefore, when such lithium-cobalt oxides are used as a cathode active material, the capacity of the obtained lithium ion batteries becomes unpractically lowered.

As a result of the present inventors' earnest studies for solving the above-mentioned problems, it has been found that by reacting cobalt oxide hydroxide with a lithium compound in the presence of alcohol, there can be obtained lithium-cobalt oxide which has a layered rock salt-type crystal structure and, therefore, is suitable as a cathode active material for lithium ion batteries. The present invention has been attained on the basis of the finding.

It is an object of the present invention to provide a process for producing lithium-cobalt oxide represented by the formula: LiₓCoO₂ (0<x<1), which has a layered rock salt-type crystal structure and is suitable as a cathode active material for lithium ion batteries, without conducting a calcination step at as high a temperature as not less than 500°C which disadvantageously needs a subsequent pulverization step of the product.

To accomplish the aim, the present invention provides a process for producing lithium-cobalt oxide, comprising reacting cobalt oxide hydroxide with a lithium compound in the presence of an alcohol.

The reaction is preferably carried out at a temperature not less than 50°C and not more than the boiling point of said alcohol.

The process preferably further comprises annealing the resulting lithium-cobalt oxide in an oxidation atmosphere at a temperature of from 200°C to 500°C for from 0.5 to 2 hours.

The cobalt oxide hydroxide and the lithium compound are preferably added to the alcohol at a molar ratio of lithium to cobalt of from 1.0:1 to 3.0:1 preferably to form an alcohol suspension containing said cobalt oxide hydroxide and said lithium compound in a total amount of 10 to 100 g based on one liter of said alcohol.

The alcohol suspension is preferably heated at a temperature of from 60 to 200°C, the heating temperature being not less than the boiling point of said alcohol, to produce lithium-cobalt oxide represented by the formula: LiₓCoO₂ (0<x<1).

The present invention is described in detail below.

The method of producing cobalt oxide hydroxide used as a starting material in the present invention is not particularly restricted, and any known methods can be used for the production of cobalt oxide hydroxide. For example, in the present invention, the cobalt oxide hydroxide can be produced by a method of blowing air into a water suspension containing cobalt (II) hydroxide while heating the suspension at 50 to 100°C.

As the lithium compounds, there may be exemplified lithium oxide, lithium hydroxide, lithium hydroxide dihydrate or the like.

The mixing ratio of the lithium compound to the cobalt oxide hydroxide is usually not less than 1.0 (calculated as a molar ratio of lithium to cobalt (Li/Co)), preferably 1.0 to 3.0. When the molar ratio (Li/Co) is less than 1.0, an excess amount of the cobalt oxide hydroxide as a starting material remains unreacted, so that it may become difficult to obtain a good electrode activity, i.e., a good electrochemical activity in an electrolyte solution having a lithium-ion conductivity. On the other hand, when the amount of the lithium compound used too exceeds a stoichiometric amount thereof, an excess amount of the lithium compound also remains unreacted in the form of a mixture with lithium-cobalt oxide as a reaction product. However, in this case, it is possible to remove the residual unreacted lithium compound from the lithium-cobalt oxide by washing it with alcohol.

In the process according to the present invention, it is essential that the cobalt oxide hydroxide and the lithium compound are reacted with each other in the presence of alcohol. In this case, the reaction is usually conducted in a suspension of the cobalt oxide hydroxide and the lithium compound in alcohol. The alcohol suspension is preferably heated at a temperature between not less than 50°C and not more than a boiling point of the alcohol used. When the heating temperature of the alcohol suspension is less than 50°C, the rate of reaction between the cobalt oxide hydroxide and the lithium compound is low. On the other hand, when the heating temperature of the alcohol suspension exceeds the boiling point of the alcohol used, it is necessary to use a special container against high pressure such as an autoclave for conducting the above reaction, and this is disadvantageous from industrial viewpoints. The heating temperature of the alcohol suspension is preferably in the range of 60 to 200°C. Accordingly, it is required to selectively use alcohol having a boiling point higher than the above-mentioned heating temperature, as a suspending medium for the alcohol suspension. The reaction time is usually 5 to 50 hours, preferably 10 to 30 hours.

The concentration of the mixture of the cobalt oxide hydroxide and the lithium compound in the alcohol suspension is usually 10 to 200 g, preferably 20 to 100 g based on one liter of the alcohol used.

The alcohol usable as the suspending medium is not limited to particular ones, and any alcohols can be used as far as alcohols are present in a liquid state at ordinary temperature. Examples of the suitable alcohols may include aliphatic alcohols such as methyl alcohol, ethyl alcohol, propyl alcohol, isopropyl alcohol, butyl alcohol, isobutyl alcohol, hexyl alcohol, heptyl alcohol, octyl alcohol, nonyl alcohol, decyl alcohol or allyl alcohol; alicyclic alcohols such as cyclopentanol; glycols such as ethylene glycol, propylene glycol, trimethylene glycol, 1,4-butane diol or 1,5-pentane diol; alkoxy-substituted aliphatic alcohols such as 2-ethoxy ethyl alcohol; or the mixture thereof.

It is preferred to use the alcohols having a boiling point higher than the heating temperature of the alcohol suspension from the standpoints of economy, workability or the like. For example, ethyl alcohol is preferably used when the heating temperature of the alcohol suspension is about 70°C; butyl alcohol is preferably used when the heating temperature is about 100°C; hexyl alcohol or 2-ethoxy ethyl alcohol is preferably used when the heating temperature is about 120°C; and octyl alcohol or ethylene glycol is preferably used when the heating temperature is about 150°C.

The lithium-cobalt oxide produced may be further annealed in an oxidation atmosphere, for example, in air or an oxygen gas. The annealing treatment may be usually conducted at a temperature of usually not less than 200 to 500°C, preferably not less than 300 to 500°C, for a period of usually 30 minutes to 2 hours, preferably 0.5 to 1.0 hours.

In the above-mentioned method, the lithium-cobalt oxide is produced by an ion exchange reaction between protons contained in a structure of the cobalt oxide hydroxide and lithium ions of the lithium compound. Therefore, the lithium-cobalt oxide has a chemical composition represented by the formula: LiₓCoO₂ (0<x<1), and the particle size thereof is substantially the same as that of the cobalt oxide hydroxide particles as the starting material. Specifically, the average particle size of the lithium-cobalt oxide may be in the range of 0.01 to 1.0 µm.

Further, the lithium-cobalt oxide produced by the process according to the present invention does not require a subsequent pulverization step, because it is not subjected to such a calcination step in which the temperature as high as not less than 500°C is used, and the particles thereof are not sintered. As a result, the lithium-cobalt oxide can exhibit a good dispersibility in a binder when used as a cathode active material for lithium ion batteries. Besides, the obtained lithium-cobalt oxide has a layered rock salt-type crystal structure and, therefore, is suitable as a cathode active material for lithium ion batteries.

The lithium-cobalt oxide produced by the process according to the present invention can also provide lithium ion batteries having a high electromotive force and a high energy density when used as a cathode active material therefor. Thus, in accordance with the present invention, it is possible to produce lithium-cobalt oxide having a layered rock salt-type crystal structure and, which is suitable as a cathode active material for lithium ion batteries, without conducting a calcination step using as high a temperature as not less than 500°C which disadvantageously requires a subsequent pulverization of sintered particles.

### EXAMPLES:

The present invention will now be described in more detail with reference to the following examples, but the present invention is not restricted to those examples and various modifications are possible within the scope of the invention.

The identification of reaction product particles and the determination of the crystal structure thereof were conducted by an X-ray diffraction method using an X-ray diffractometer (manufactured by RIGAKU DENKI CO., LTD.; X-ray used: Mn-filtered Fe Kα-ray, acceleration voltage: 40 kV and current: 20 mA).

### Example 1:

12.4 g of cobalt oxide hydroxide particles and 3.88 g of lithium hydroxide (Li/Co = 1.2) were added to 300 ml of ethyl alcohol, heated to 70°C while stirring, and reacted with each other for 10 hours at that temperature. The resultant suspension was filtered to separate a solid reaction product therefrom. The obtained solid reaction product was washed with ethyl alcohol, and then dried at room temperature for one day under reduced pressure. Thereafter, the dried reaction product was annealed in air at 400°C for one hour to obtain black colored particles.

As a result of x-ray diffraction analysis, the obtained black colored particles were identified to be lithium-cobalt oxide particles having a layered rock salt-type crystal structure and represented by the formula: LiₓCoO₂ (x = 0.95). The average particle size of the obtained black colored particles was 0.15 µm.

### <Evaluation of electrochemical properties>

The electrochemical properties of the obtained lithium cobalt oxide, when used as an electrode active substance, were evaluated by a potential sweep method.

First, the obtained lithium-cobalt oxide particles were mixed with 10 % by weight of polyethylene tetrafluoride as a binder and 10 % by weight of carbon black as a conducting agent. 0.5 g of the obtained mixture was filled into a nickel mesh as a current collector to form a cathode.

In addition, metal lithium foils were filled into a stainless steel mesh to form an anode. An electrode made of metal lithium was used as a reference electrode. As an electrolyte, there was used a solution prepared by dissolving lithium perchlorate (LiClO₄) in a mixed solvent containing propylene carbonate and dimethoxy ethane in a volume ratio of 1:1, such that the molar concentration of the lithium perchlorate in the solution was 1 mol.

The thus-produced cathode, anode and reference electrode were immersed in the electrolyte to form a cell for electrochemical measurement of the lithium-cobalt oxide. By using the thus-formed cell for the electrochemical measurement, the charge and discharge characteristic curve thereof was determined under such conditions that the voltage applied was 3.0 to 4.2 V based on the reference metal lithium electrode and the current was 0.5 mA/cm². As a result, it was confirmed that the charge and discharge capacity of the cell as an index showing an electrochemical activity of the lithium-cobalt oxide was 124 mAh/g.

### Examples 2 to 5:

The same procedure as defined in Example 1 was conducted except that the mixing ratio (molar ratio) of cobalt oxide hydroxide particles to lithium compound particles, the kind of alcohol used, the heating temperature, use or non-use of annealing treatment and conditions of the annealing treatment were varied as shown in Tables 1 and 2, thereby obtaining lithium-cobalt oxide particles. Reaction conditions used for the production of lithium-cobalt oxide particles and properties of the lithium-cobalt oxide particles as a reaction product are also shown in Tables 1 and 2.

**Table 1**

| | Lithium compound | Li/Co molar ratio | Alcohol used |
|---|---|---|---|
| Example 1 | Lithium hydroxide | 1.2 | Ethyl alcohol |
| Example 2 | Lithium hydroxide | 1.4 | Ethyl alcohol |
| Example 3 | Lithium hydroxide | 1.0 | Ethyl alcohol |
| Example 4 | Lithium hydroxide | 1.2 | n-butyl alcohol |
| Example 5 | Lithium hydroxide | 1.4 | 2-ethoxy ethyl alcohol |

**Table 2**

| | Heating temperature (°C) | Annealing treatment | Charge and discharge electric capacity (mAh/g) |
|---|---|---|---|
| Example 1 | 70 | Temp.: 400°C Time: 1 hour | 124 |
| Example 2 | 70 | Temp.: 300°C Time: 1.5 hours | 115 |
| Example 3 | 70 | Not conducted | 110 |
| Example 4 | 100 | Temp.: 500°C Time: 30 minutes | 136 |
| Example 5 | 130 | Temp.: 300°C Time: 45 minutes | 112 |

As a result of the X-ray diffraction analysis, it was recognized that all of the lithium-cobalt oxide particles obtained in Examples 2 to 5 had a rock salt-type crystal structure. In addition, in the case where the lithium-cobalt oxide particles obtained in Examples 2 to 5 were used as a cathode active material in lithium ion batteries, the charge and discharge electric capacity thereof were large. This indicated that the obtained lithium-cobalt oxide particles showed a high electrochemical activity.

## Claims

1. A process for producing lithium-cobalt oxide, comprising reacting cobalt oxide hydroxide with a lithium compound in the presence of an alcohol.

2. A process according to claim 1, wherein the reaction is conducted in a suspension of said cobalt oxide hydroxide and said lithium hydroxide in said alcohol, at a temperature not less than 50°C and not more than the boiling point of said alcohol.

3. A process according to claim 2, wherein said temperature is from 60 to 200°C.

4. A process according to any one of the preceding claims, wherein said cobalt oxide hydroxide and said lithium compound are provided in a ratio of not less than 1.0:1, calculated as the molar ratio of lithium to cobalt.

5. A process according to claim 4, wherein said ratio is from 1.0:1 to 3.0:1.

6. A process according to any one of the preceding claims, wherein said cobalt oxide hydroxide and said lithium compound are provided in a total amount of from 10 to 100 g per liter of said alcohol.

7. A process according to any one of the preceding claims, wherein said alcohol is selected from aliphatic alcohols, alicyclic alcohols, glycols and alkoxy-substituted aliphatic alcohols.

8. A process according to claim 7, wherein said alcohol is at least one alcohol selected from methyl alcohol, ethyl alcohol, propyl alcohol, isopropyl alcohol, butyl alcohol, isobutyl alcohol, hexyl alcohol, heptyl alcohol, octyl alcohol, nonyl alcohol, decyl alcohol, allyl alcohol, cyclopentanol, ethylene glycol, propylene glycol, trimethylene glycol, 1,4-butane diol, 1,5-pentane diol and 2-ethoxy ethyl alcohol.

9. A process according to any one of the preceding claims, further comprising annealing the resulting lithium-cobalt oxide in an oxidising atmosphere at a temperature of from 200°C to 500°C for from 0.5 to 2 hours.

10. A process according to any one of the preceding claims, further comprising preparing a cathode for a lithium ion battery using the resulting lithium-cobalt oxide.

## Patentansprüche

1. Verfahren zur Herstellung von Lithium-Cobalt-Oxid, das Umsetzen von Cobaltoxidhydroxid mit einer Lithium-Verbindung in Gegenwart eines Alkohols umfaßt.

2. Verfahren nach Anspruch 1, wobei die Reaktion in einer Suspension des Cobaltoxidhydroxids und des Lithiumhydroxids in dem Alkohol bei einer Temperatur nicht unter 50°C und nicht über dem Siedepunkt des Alkohols durchgeführt wird.

3. Verfahren nach Anspruch 2, wobei die Temperatur zwischen 60 und 200°C liegt.

4. Verfahren nach einem der vorangehenden Ansprüche, wobei das Cobaltoxidhydroxid und die Lithium-Verbindung in einem Verhältnis von nicht kleiner als 1,0:1, berechnet als das Molverhältnis von Lithium zu Cobalt, bereitgestellt werden.

5. Verhältnis nach Anspruch 4, wobei das Verhältnis zwischen 1,0:1 und 3,0:1 liegt.

6. Verfahren nach einem der vorangehenden Ansprüche, wobei das Cobaltoxidhydroxid und die Lithium-Verbindung in einer Gesamtmenge von 10 bis 100 g pro Liter des Alkohols bereitgestellt werden.

7. Verfahren nach einem der vorangehenden Ansprüche, wobei der Alkohol aus aliphatischen Alkoholen, alicyclischen Alkoholen, Glycolen und Alkoxy-substituierten aliphatischen Alkoholen ausgewählt wird.

8. Verfahren nach Anspruch 7, wobei der Alkohol mindestens ein Alkohol ist, der aus Methylalkohol, Ethylalkohol, Propylalkohol, Isopropylalkohol, Butylalkohol, Isobutylalkohol, Hexylalkohol, Heptylalkohol, Octylalkohol, Nonylalkohol, Decylalkohol, Allylalkohol, Cyclopentanol, Ethylenglycol, Propylenglycol, Trimethylenglycol, 1,4-Butandiol, 1,5-Pentandiol und 2-Ethoxyethylalkohol ausgewählt wird.

9. Verfahren nach einem der vorangehenden Ansprüche, das außerdem Glühen des resultierenden Lithium-Cobalt-Oxid in einer oxidierenden Atmosphäre bei einer Temperatur von 200°C bis 500°C für 0,5 bis 2 Stunden umfaßt.

10. Verfahren nach einem der vorangehenden Ansprüche, das außerdem Herstellen einer Kathode für eine Lithiumionen-Batterie unter Verwendung des resultierenden Lithium-Cobalt-Oxids umfaßt.

## Revendications

1. Procédé de préparation d'oxyde de lithium et de cobalt, comprenant la réaction d'un hydroxyde-oxyde de cobalt avec un composé de lithium en présence d'un alcool.

2. Procédé selon la revendication 1, dans lequel la réaction est effectuée dans une suspension dudit hydroxyde-oxyde de cobalt et dudit hydroxyde de lithium dans ledit alcool, à une température non inférieure à 50°C et non supérieure au point d'ébullition dudit alcool.

3. Procédé selon la revendication 2, dans lequel ladite température est comprise entre 60 et 200°C.

4. Procédé selon l'une quelconque des revendications précédentes, dans lequel ledit hydroxyde-oxyde de cobalt et ledit composé de lithium sont fournis dans un rapport non inférieur à 1,0:1, calculée comme étant le rapport molaire du lithium par rapport au cobalt.

5. Procédé selon la revendication 4, dans lequel ledit rapport est compris entre 1,0:1 et 3,0:1.

6. Procédé selon l'une quelconque des revendications précédentes, dans lequel ledit hydroxyde-oxyde de cobalt et ledit composé de lithium sont fournis dans une quantité totale comprise entre 10 et 100 g par litre dudit alcool.

7. Procédé selon l'une quelconque des revendications précédentes, dans lequel ledit alcool est choisi parmi les alcools aliphatiques, les alcools alicycliques, les glycols et les alcools aliphatiques alcoxy-substitués.

8. Procédé selon la revendication 7, dans lequel ledit alcool est au moins un alcool choisi parmi l'alcool méthylique, l'alcool éthylique, l'alcool propylique, l'alcool isopropylique, l'alcool butylique, l'alcool isobutylique, l'alcool hexylique, l'alcool heptylique, l'alcool octylique, l'alcool nonylique, l'alcool décylique, l'alcool allylique, le cyclopentanol, l'éthylène-glycol, le propylène-glycol, le triméthylène-glycol, le 1,4-butanediol, le 1,5-pentanediol et l'alcool 2-éthoxy éthylique.

9. Procédé selon l'une quelconque des revendications précédentes, comprenant en outre le recuit de l'oxyde de lithium et de cobalt obtenu sous une atmosphère oxydante à une température comprise entre 200°C et 500°C pendant une période comprise entre 30 minutes et 2 heures.

10. Procédé selon l'une quelconque des revendications précédentes, comprenant en outre la préparation d'une cathode pour une batterie lithium-ion utilisant l'oxyde de lithium et de cobalt obtenu.
